# FASCICULE DE BREVET EUROPEEN

(11) **EP 1 399 323 B1**
(45) Date de publication et mention de la délivrance du brevet: **27.07.2011**
(21) Numéro de dépôt: 02740663.6
(22) Date de dépôt: 29.05.2002
(51) Int. Cl.: B60C 25/00, B60C 25/02, G01M 17/02

(54) **PROCEDE ET DISPOSITIF DE MONTAGE D'UN PNEUMATIQUE ET PROCEDE D'ANALYSE DUDIT PNEUMATIQUE**
VERFAHREN UND VORRICHTUNG ZUR MONTAGE EINES REIFENS UND VERFAHREN ZUR ANALYSE DES REIFENS
METHOD AND DEVICE FOR MOUNTING A TYRE AND METHOD FOR ANALYSING SAID TYRE

(30) Priorité: 07.06.2001 FR 0107626
(43) Date de publication de la demande: 24.03.2004
(73) Titulaire: Société de Technologie Michelin, 63000 Clermont-Ferrand Cedex 09 (FR); Michelin Recherche et Technique S.A., 1763 Granges-Paccot (CH)
(72) Inventeur: MALEO, Patrick, F-63430 Pont Du Chateau (FR); KELLER, Jean-Paul, F-63430 Pont Du Chateau (FR)
(74) Mandataire: Le Cam, Stéphane Georges Elie
(86) Numéro de dépôt international: PCT/EP2002/005897
(87) Numéro de publication internationale: WO 2002/098683

(56) Documents cités:
- US-A- 5 060 510
- US-A- 5 616 859

## Description

L'invention concerne un procédé et un dispositif de montage d'un pneumatique, du type à chambre incorporée communément désignée par « tubeless », sur une jante. Le montage selon l'invention permet notamment de maîtriser les variations de charge radiale sur la périphérie de l'ensemble monté. L'invention propose encore une méthode d'analyse d'un tel pneumatique préalablement au montage.

Bien que non limitée à de telles applications, l'invention sera plus particulièrement décrite en référence au montage de pneumatiques sur des jantes comportant des humps. Les humps sont des bossages dont la fonction est d'éviter ou tout au moins de retarder la survenance d'un décoincement du pneumatique en cas de baisse de pression.

Une jante usuelle de type base creuse est constituée de différentes zones ; tout d'abord, un rebord de jante, ou zone d'accrochage, dont le rôle essentiel est de retenir le bourrelet du pneumatique à l'état gonflé ; ensuite le siège du bourrelet, habituellement légèrement conique, sur lequel repose le bourrelet et qui en assure le serrage, ainsi que l'étanchéité à l'air dans le cas des pneumatiques à chambre incorporée dits « tubeless » ; et enfin une gorge destinée à permettre le montage du pneumatique du fait de son diamètre inférieur à celui du rebord. Dans le cas d'une jante comportant des humps, ceux-ci sont présents entre le siège du bourrelet et la gorge qui autorise le montage.

Le procédé de montage usuel d'un pneumatique sur une telle jante par exemple à l'aide d'une machine semi-automatique consiste en différentes étapes qui sont les suivantes ; on commence par faire passer une partie du premier bourrelet par-dessus le premier rebord de jante et on place cette partie dans la gorge. On peut alors faire passer le reste du bourrelet par-dessus le premier rebord grâce à une légère ovalisation de la tringle et une déformation du flanc souple du pneumatique. Il en est de même pour faire passer le second bourrelet par-dessus le premier rebord de la jante ou l'autre rebord. Le montage est ensuite terminé par une étape finale de gonflage à une pression telle qu'elle assure la mise en place des bourrelets sur les sièges en appui sur les deux rebords de jante. Durant cette dernière étape les bourrelets franchissent les humps qui forment un obstacle au passage desdits bourrelets jusqu'à leur siège respectif. L'ensemble monté ainsi constitué est ensuite ramené à la pression de roulage requise.

Il est connu que les pneumatiques peuvent présenter des non-uniformités circonférentielles ; il s'agit d'imperfections provenant par exemple d'irrégularités d'épaisseurs des bandes de caoutchouc qui constituent le pneumatique ou bien par exemple des surépaisseurs dans les zones de soudures des produits semi-finis qui constituent le pneumatique ou bien encore de variation de rigidité au tour de roue, due notamment aux soudures et aux non-homogénéités des matériaux. Ces non-uniformités, qui peuvent être de différents types se traduisent par différents types de perturbations sur le comportement des ensembles montés, qui sont détectées et éventuellement corrigées de façons différentes. Ces non-uniformités peuvent notamment se traduire par des variations de charge radiale, des variations d'effort axial, des variations d'effort tangentiel, etc ...

Des méthodes connues permettent de mettre en évidence ces non-uniformités et des moyens sont également connus pour les corriger lorsque cela s'avère nécessaire. Une telle méthode selon le preambule de la revendication 1, qui vise à détecter et éventuellement corriger les variations de charge radiale, est notamment décrite dans le document US 3,724,137 ; ce document décrit une technique consistant à monter un pneumatique sur la jante d'une roue, à gonfler l'ensemble monté ainsi constitué à la pression de roulage et à le faire rouler contre un tambour de charge exerçant sur l'ensemble monté une charge de manière à obtenir une déformation prédéterminée. On mesure ainsi la force radiale exercée par l'ensemble monté sur le tambour de charge et les variations de cette force au moyen de transducteurs de force qui sont montés sur l'axe du tambour de charge et orientés radialement. En fonction des variations de charge radiale décelées, il peut éventuellement être engagé des actions correctives par exemple en utilisant des meules d'abrasion qui viennent enlever de la matière sur la bande de roulement de manière à rendre l'ensemble monté plus uniforme et à ramener les variations de charge radiale dans des tolérances acceptables.

Les documents US 5,060,510 et US 5,616,859 décrivent également des techniques permettant de déterminer les variations de charge radiales au tour de roue des ensembles montés.

Ces méthodes de détection montrent que bien souvent les pneumatiques comportent des défauts d'uniformité, dus essentiellement au procédé de fabrication, qui, s'ils peuvent être minimisés par des fabrications de qualité améliorée, ne peuvent assurément pas être totalement inexistants. En effet, il est de toute évidence impossible de garantir l'inexistence de tels défauts. Les pneumatiques peuvent toutefois être commercialisés lorsqu'ils présentent des valeurs de variation de charge radiale qui sont comprises dans des tolérances définies, pour que l'usage des pneumatiques n'entraîne pour l'utilisateur final aucun désagrément insupportable. Il reste clair cependant que ces variations de charge radiale qui peuvent exister seront une gêne plus ou moins sensible pour l'utilisateur notamment en termes de confort.

L'on s'est ainsi donné pour mission la conception d'une technique de montage qui permette le cas échéant de modérer notamment les effets de la variation de charge radiale du pneumatique sur l'ensemble monté.

Ce but est atteint selon l'invention par un procédé de montage d'un pneumatique sur une jante de roue, ledit pneumatique possédant un repère indiquant une valeur extrême d'un paramètre présentant une variation circonférentielle, procédé selon lequel on retient une zone d'au moins un bourrelet du pneumatique au moins pendant une première phase de gonflage, ladite zone étant azimutée en fonction dudit repère apposé sur le pneumatique.

Selon une réalisation préférée de l'invention, le repère indique la position du maximum de l'harmonique H1 de la variation de charge radiale du pneumatique.

Selon une variante avantageuse de l'invention, on retient le bourrelet sur une zone coïncidant avec le repère apposé sur le pneumatique.

Selon ce procédé de montage, une zone prédéterminée du bourrelet du pneumatique qui correspond à son maximum de l'harmonique H1 de variation de charge radiale est retenue temporairement alors que le bourrelet correspondant franchit le hump pour venir se positionner sur le siège du bourrelet au contact du rebord de jante sous l'effet du gonflage. On détermine ainsi le secteur du bourrelet qui franchit en dernier le hump.

Les résultats ainsi obtenus montrent qu'effectivement le procédé de montage selon l'invention peut permettre de diminuer les variations de charge radiale obtenues sur des ensembles montés quels que soient le type et la dimension des pneumatiques utilisés.

On a su mettre en évidence que lors d'un montage d'un pneumatique sur la jante d'une roue, il apparaît une composante supplémentaire dans la constitution de la variation de charge radiale de l'ensemble monté due au montage lui-même. On a en outre mis en évidence qu'un montage tel que préconisé selon l'invention permet d'améliorer l'uniformité de l'ensemble monté sur le tour de roue. On a en effet su mettre en évidence que, du passage des humps lors du gonflage, peut résulter une assise non-axisymétrique du bourrelet sur le tour de roue. Il est apparu que bien que le passage à problème des humps soit localisé sur un faible secteur correspondant à la dernière zone du bourrelet franchissant le hump lors du gonflage, il entraîne une perturbation qui se répartit en harmonique H1 sur le tour de roue. Cette variation de charge radiale due au montage du pneumatique sur la roue vient donc s'additionner vectoriellement à l'harmonique H1 de la variation de charge radiale du pneumatique.

On a en outre mis en évidence que la dernière zone du bourrelet franchissant le hump conduit à la composante minimale de charge radiale due au montage.

Le procédé de montage selon l'invention correspond ainsi à un assemblage en opposition de phase des harmoniques H1 de la variation de charge radiale du pneumatique et de la variation de charge radiale due au montage.

Selon une réalisation préférée de l'invention, on retient des zones des deux bourrelets du pneumatique de manière symétrique par rapport au plan médian circonférentiel. Selon ce mode de réalisation de l'invention, le passage des humps est contrôlé des deux côtés du pneumatique durant la phase de gonflage.

De manière avantageuse et notamment pour permettre la finition du montage sans risque d'augmenter la variation de charge radiale due au montage ni par exemple de détériorer la surface extérieure du (ou des) flanc du pneumatique sur lequel peut s'exercer la retenue, l'intensité de ladite retenue du bourrelet diminue avec le gonflage.

Il est également connu que les roues sur lesquelles sont montés les pneumatiques peuvent aussi présenter des défauts circonférentiels dus aux techniques de fabrication. Ces défauts sont quasi inexistants sur des roues en alliage et bien moins importants sur des roues en acier que cela ne l'était au par avant. Il est souvent possible de négliger de tels défauts, leur niveau d'importance étant secondaire au regard des valeurs de variation de charge radiale pouvant exister sur un pneumatique. Toutefois, dans le cadre de l'invention, le procédé proposant notamment d'améliorer l'uniformité de l'ensemble monté, il peut être opportun de prendre en compte le faux-rond moyen de la roue qui peut générer une variation en harmonique H1 de la charge radiale due à la roue. La résultante de ces trois paramètres, liés respectivement au pneumatique, au montage et à la roue, qui est une somme vectorielle, va conduire à une variation de charge radiale de l'ensemble monté. Une volonté de réalisation pourrait être d'essayer dans la mesure du possible une combinaison vectorielle des trois paramètres conduisant à un ensemble monté circonférentiellement uniforme, c'est-à-dire d'essayer d'obtenir une somme vectorielle nulle. Les valeurs absolues ou normes desdits vecteurs n'étant pas connues précisément et d'autre part mesurées selon des méthodes différentes, il semble délicat industriellement de mettre en oeuvre une telle technique ; il est toutefois possible selon le principe précédent de l'invention d'orienter les trois vecteurs pour en opposer deux au plus important, c'est-à-dire de mettre en opposition de phase deux paramètres de variation de charge radiale par rapport au troisième. Par orientation, il faut comprendre au sens de l'invention que l'on va essayer de faire coïncider la position de ces vecteurs à un angle près, celui-ci étant défini par les outils de mesure utilisés lors de la mise en place des repères, par le positionnement de la dernière zone franchissant les humps lors du montage et par la précision des différents outils utilisés lors du montage.

Selon une première variante de réalisation de l'invention, le pneumatique est monté sur une roue dont le maximum de l'harmonique H1 du faux-rond moyen est repéré, le repère du pneumatique étant diamétralement opposé audit repère de la roue lors du montage.

Un tel montage correspond par exemple à un cas où la variation de charge radiale du pneumatique est prépondérante par rapport aux autres paramètres que sont la variation de charge radiale due au montage et le faux-rond moyen de la roue.

Selon une seconde variante de réalisation de l'invention, le pneumatique est monté sur une roue dont le maximum de l'harmonique H1 du faux-rond moyen est repéré, le repère du pneumatique étant positionné sur un rayon similaire à celui dudit repère de la roue lors du montage.

Ce second type de montage correspond à un cas où la variation de charge radiale due au montage est prépondérante par rapport à la variation de charge radiale du pneumatique et au faux-rond de la roue.

Selon l'une ou l'autre de ces variantes de réalisation, l'invention peut permettre d'obtenir une amélioration de l'uniformité circonférentielle de l'ensemble monté en ce qui concerne la variation de charge radiale.

On propose encore un dispositif pour la mise en oeuvre du procédé précédemment décrit.

Selon l'invention, ce dispositif de montage d'un pneumatique sur une jante, ledit pneumatique possédant un repère indiquant une valeur extrême d'un paramètre présentant une variation circonférentielle, comporte, outre les moyens usuels de montage et de gonflage, un outil prévu pour exercer une force d'appui sur une zone d'au moins un flanc du pneumatique au moins pendant une première phase de gonflage, ladite zone étant azimutée en fonction dudit repère.

Selon une réalisation préférée de l'invention, le repère indique la position du maximum de l'harmonique H1 de la variation de charge radiale du pneumatique.

Selon une variante avantageuse de l'invention ladite zone coïncide avec ledit repère.

Selon un premier mode de réalisation de l'invention plus particulièrement adapté au cas d'une machine semi-automatique, l'outil se présente avantageusement sous la forme d'une pince ou tenaille de façon à pouvoir agir sur les deux flancs du pneumatique simultanément pour maîtriser le passage des humps de chaque côté. La pince est de préférence utilisée sur un second poste pour simplifier sa mise en place sur le pneumatique, ledit second poste étant un poste de gonflage. Selon d'autres réalisations, la pince peut être prévue sur le poste de montage, l'ensemble monté étant amené dans la position adéquate avant que le gonflage ne commence. La mise en place de la pince au contact du pneumatique peut être réalisée manuellement ou de façon semi-automatique. La force exercée sur la pince pour être reproduite sur le pneumatique sera avantageusement obtenue par un système de type vérin de façon à obtenir une force d'intensité suffisante et reproductible ; de tels moyens permettent également de diminuer progressivement l'intensité de la force lorsque le gonflage arrive à la pression souhaitée. Les zones de contacts entre la pince et le pneumatique présentent de préférence une certaine surface pour ne pas détériorer le pneumatique ; ces zones ne sont avantageusement pas trop étendues de façon à localiser dans une zone la plus réduite possible le passage final des humps.

Selon un second mode de réalisation de l'invention correspondant plus spécifiquement à une ligne de montage automatisée, l'outil se présente sous la forme d'au moins un moyen de pression mécanique. Une ligne de montage automatisée, consiste à effectuer un gonflage rapide, pour des raisons de cadence, des ensembles montés sans utiliser la valve ; pour se faire, une cloche est appliquée de manière étanche sur un flanc du pneumatique, celle-ci appuyant sur la partie basse dudit flanc pour maintenir le bourrelet espacé du rebord de jante et offrir un passage à l'air qui est introduit sous pression. Le moyen de pression mécanique selon l'invention peut être un élément supplémentaire ou il peut être combiné aux moyens qui maintiennent le bourrelet écarté durant le gonflage. Il peut notamment s'agir d'une cloche dont le profil périphérique est modifié, par exemple par la présence d'un bossage local, de sorte que ladite cloche exerce une pression plus importante sur une zone locale et prédéterminée de la partie basse du flanc.

Comme dans le cas précédent, le moyen de pression mécanique est tel qu'il présente avantageusement des zones de contacts entre l'outil et le pneumatique possédant une certaine surface pour ne pas détériorer le pneumatique ; ces zones ne sont avantageusement pas trop étendues de façon à localiser dans une zone la plus réduite possible le passage final des humps.

Selon une réalisation préférée de ce second mode de réalisation, un second moyen de pression mécanique est prévu sur l'autre flanc de façon à maîtriser le passage final des humps de chaque côté, en vis à vis.

Il est aussi proposé un procédé d'analyse d'un pneumatique pour prévoir sa sensibilité, ou son aptitude, au montage sur une jante, le procédé consistant à déterminer une variation de charge radiale due au montage du pneumatique sur une jante comportant des humps.

Le procédé d'analyse selon l'invention permet de donner une tendance pour une famille de pneumatiques donnée avec une valeur comparable à celles obtenues pour d'autres familles de pneumatiques déjà mesurées.

Il peut en effet être opportun de prévoir quelle sera la variation de charge radiale due au montage d'un pneumatique pour savoir soit si la technique de montage selon l'invention nécessite d'être employée soit pour éventuellement définir comment effectuer le montage par exemple en tenant compte du faux-rond moyen de la roue. En effet, une telle méthode prévisionnelle peut conduire à négliger la variation de charge radiale due au montage, ou bien si celle-ci est importante, à prévoir éventuellement de l'associer à celle de la roue ou au contraire à la compenser par la combinaison de celle de la roue associée à celle du pneumatique.

Selon une réalisation préférée de l'invention, ce procédé d'analyse d'un pneumatique de la famille considérée consiste à déterminer la variation de charge radiale d'un ensemble monté, la jante présentant des humps, à déterminer la variation de charge radiale de ce même pneumatique et à effectuer la différence vectorielle entre les deux valeurs obtenues.

La mesure de la variation de charge radiale du pneumatique de la famille considérée est obtenue par mesure sur un ensemble monté utilisant une jante sans humps et des moyens de graissage très performant assurant un bon positionnement.

Dans les deux cas la mesure de variation de charge radiale est faite selon la technique évoquée précédemment et de préférence sur le même dispositif de mesure.

D'autres détails et caractéristiques avantageux de l'invention ressortiront ci-après de la description d'un exemple de réalisation de l'invention et d'essais réalisés en référence aux figures 1 à 4 qui représentent :
figure 1, un schéma d'un dispositif pour la mise en oeuvre de l'invention sur une machine de montage d'un pneumatique semi-automatique,
figure 2, une courbe illustrant la variation de charge radiale liée au montage,
figure 3, un diagramme illustrant les résultats obtenus selon un montage usuel, dit aléatoire,
figure 4, un diagramme illustrant les résultats obtenus selon l'invention.

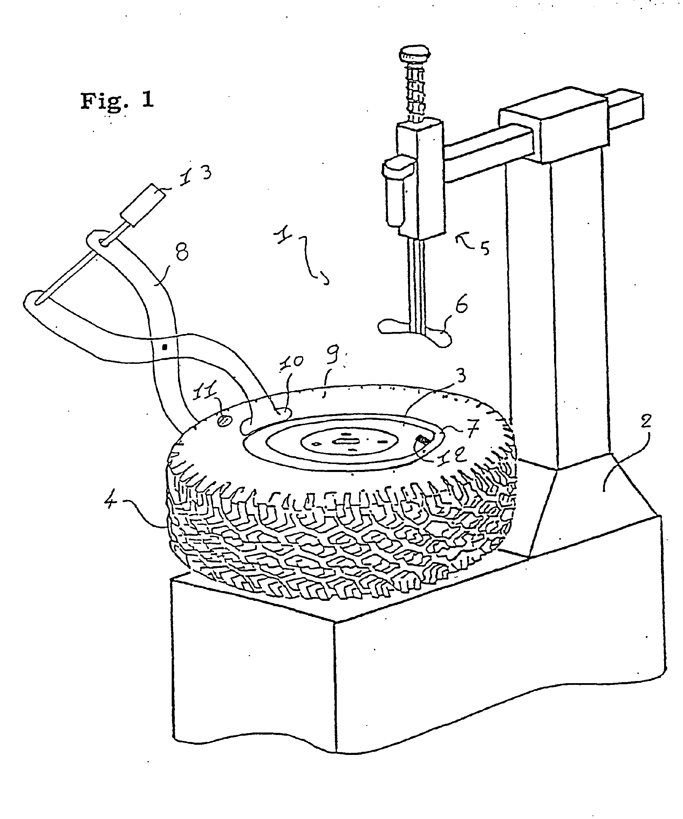

La figure 1 n'est pas représentée à l'échelle pour en simplifier la compréhension.

Sur la figure 1 est représenté de manière schématique une machine de montage semi-automatique 1 qui comprend un bâti 2 sur lequel un plateau tournant, non représenté sur la figure 1, permet de faire tourner l'ensemble roue 3 et pneumatique 4 autour d'un axe vertical. La machine comprend encore un outil 5 couplé à un galet 6 qui permet de faire passer le bourrelet du pneumatique 4 par-dessus le rebord de jante 7. Sur la figure 1, l'outil 5 est représenté dans une position relevée, le passage du second bourrelet du pneumatique 4 par-dessus le rebord de la jante 7 étant déjà réalisé.

Sur cette même figure 1 est représenté un dispositif selon l'invention que l'on peut qualifier de pince ou tenaille 8. Cette pince 8 est positionnée au contact du pneumatique 4 en appui sur chacun des flancs 9 au plus près de la roue 3 par l'intermédiaire d'embouts ou mâchoires 10 qui autorisent un appui non ponctuel pour ne pas endommager la surface du pneumatique 4. La pince 8 est encore associée à un système de serrage, comme un vérin 13, qui permet de garantir l'intensité du serrage et d'assurer sa reproductibilité. Les zones d'appui de la pince 8 sur les flancs 9 coïncident avec un marquage ou étiquetage 11 réalisé sur le pneumatique 4. Ce marquage 11 préalablement réalisé indique le maximum de l'harmonique H1 de la charge radiale du pneumatique 4.

Ce maximum de la charge radiale du pneumatique 4 est préalablement déterminé par des mesures telles que celles décrites notamment dans le brevet US 3,724,137.

Sur la figure 1 est encore représentée la valve 12 connectée à un tuyau, non représenté, par lequel arrive l'air comprimé qui va permettre le gonflage du pneumatique et ainsi terminer son montage.

Selon le principe de l'invention, préalablement à cette phase de gonflage, la pince 8 est positionnée et actionnée pour venir serrer les bourrelets sur chacun des flancs du pneumatique 4 au niveau de l'étiquetage 11. La mise en place de la pince 8 et son serrage peuvent être manuels ou automatiques, les automatismes pouvant être réalisés par tous moyens connus de l'homme du métier, le pneumatique 4 étant positionnée de sorte que l'étiquetage 11 fasse face à la pince 8. L'action de la pince 8 va avantageusement diminuer de manière progressive et permettre le passage des humps par les zones des bourrelets jusque là retenues. Ces zones étant selon l'invention les dernières à franchir les humps sur le tour de roue.

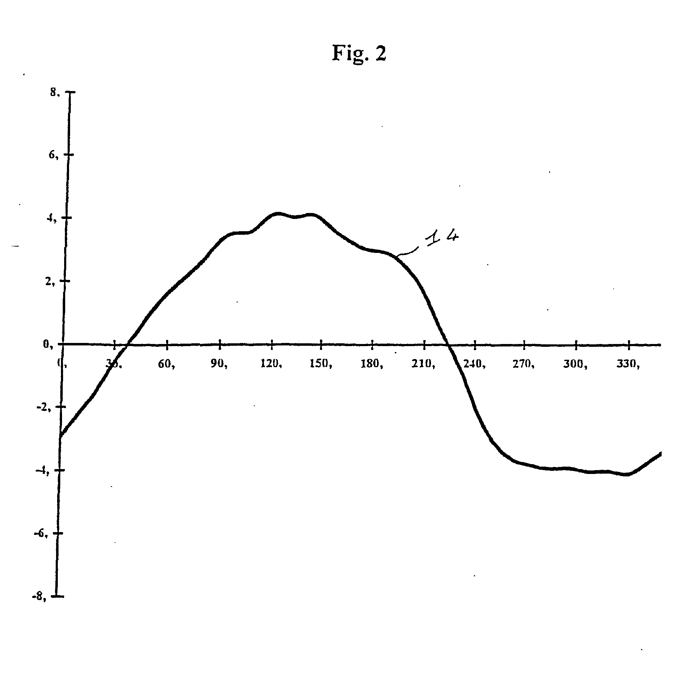

La figure 2 est une courbe représentant la variation de charge radiale liée au montage d'un pneumatique sur une roue comportant une jante avec des humps. Cette courbe est obtenue par la différence de deux mesures effectuées sur un tour de roue. Ces mesures sont respectivement, la mesure de la variation de charge radiale d'un pneumatique et la variation de charge radiale d'un ensemble monté sur un tour de roue. Les mesures sont faites selon une technique telle que celle décrite précédemment et notamment décrite dans le brevet US 3,724,137.

Les mesures sont effectuées sur la même installation avec des conditions qui sont adaptées aux dimensions du pneumatique.

La mesure de la variation de charge radiale du pneumatique est obtenue par mesure sur un ensemble monté utilisant une jante sans humps avec utilisation d'une graisse à fort pouvoir lubrifiant, qui autorise un bon montage pour ce qui est du positionnement des bourrelets du pneumatique sur leurs sièges en appui sur les rebords de jante.

La mesure de la variation de charge radiale de l'ensemble monté est effectuée sur une jante comportant des humps tels qu'elle présente des conditions pénalisantes en terme de franchissement dans le cadre des tolérances de la norme ETRTO.

La courbe 14 obtenue selon la méthode expliquée précédemment et représentée sur la figure 2 est donc la variation de charge radiale due au montage, exprimée en daN, sur un tour de roue. Elle montre que la variation de charge radiale se répartit bien essentiellement en harmonique H1.

Ces résultats vont permettre comme exprimé précédemment de savoir s'il est opportun d'utiliser le procédé de montage selon l'invention.

Ces résultats peuvent également être une source d'information pour les personnes chargées de développer de nouvelles structures de pneumatiques. En effet, il est ainsi notamment possible d'optimiser les zones basses des pneumatiques pour améliorer le montage desdits pneumatiques.

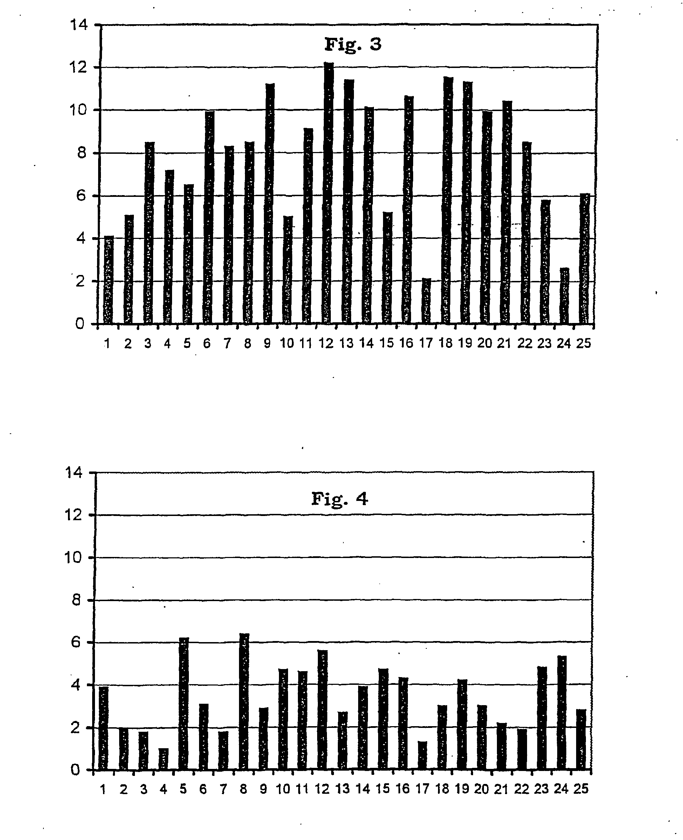

Les figure 3 et 4 représentent respectivement un diagramme illustrant les résultats obtenus avec un montage usuel dit aléatoire et un diagramme illustrant les résultats obtenus selon l'invention, concernant le montage d'un pneumatique 215/55 R 16. Les résultats présentés correspondent aux valeurs du maximum de charge radiale obtenues pour chaque diagramme sur 25 ensembles montés. Ces figures montrent que le montage proposé par l'invention permet d'améliorer la qualité du montage et plus spécifiquement la variation de charge radiale sur un tour de roue. En effet, la valeur du maximum de charge radiale obtenue par la moyenne des 25 mesures est égale à 3,5 daN dans le cas de l'invention alors que la valeur moyenne obtenue sur les 25 montages aléatoires est de 8,1 daN.

Il faut ajouter que le montage selon l'invention peut être effectué sans risque quel que soit le pneumatique qui doit être monté. En effet, ce montage peut éventuellement n'apporter qu'un effet négligeable dans le cas d'un pneumatique qui ne présente a priori pas de risques potentiels de variation de charge radiale due à son montage mais la technique de montage selon l'invention ne pourra en aucun cas être nuisible à la qualité de l'ensemble monté notamment en ce qui concerne sa variation de charge radiale.

## Revendications

1. Procédé de montage d'un pneumatique (4) sur une jante (7), ledit pneumatique possédant un repère (11) indiquant une valeur extrême d'un paramètre présentant une variation circonférentielle **caractérisé en ce qu'**on retient une zone d'au moins un bourrelet du pneumatique au moins pendant une première phase de gonflage et **en ce que** ladite zone est azimutée en fonction dudit repère.

2. Procédé selon la revendication 1 **caractérisé en ce que** le repère (11) indique la position du maximum de l'harmonique H1 de la variation de charge radiale du pneumatique (4).

3. Procédé selon la revendication 1 ou 2 **caractérisé en ce que** ladite zone coïncide avec ledit repère (11).

4. Procédé selon la revendication 1, 2 ou 3 **caractérisé en ce qu'**on retient des zones des deux bourrelets du pneumatique (4).

5. Procédé selon l'une de revendications 1 à 4 **caractérisé en ce que** l'intensité de la retenue diminue avec le gonflage.

6. Procédé selon l'une des revendications 1 à 5 **caractérisé en ce que** le pneumatique (4) est monté sur une roue (3) dont le maximum de l'harmonique H1 du faux-rond moyen est repéré et **en ce que** le repère du pneumatique est diamétralement opposé au repère de la roue lors du montage.

7. Procédé selon l'une des revendications 1 à 5 **caractérisé en ce que** le pneumatique (4) est monté sur une roue (3) dont le maximum de l'harmonique H1 du faux-rond moyen est repéré et **en ce que** le repère du pneumatique est positionné sur un rayon similaire à celui du repère de la roue lors du montage.

8. Dispositif de montage d'un pneumatique (4) sur une jante (7), ledit pneumatique possédant un repère (11) indiquant une valeur extrême d'un paramètre présentant une variation circonférentielle **caractérisé en ce qu'**un outil (8) est prévu pour exercer une force d'appui sur une zone d'au moins un flanc (9) du pneumatique au moins pendant une première phase de gonflage et **en ce que** ladite zone est azimutée en fonction dudit repère (11).

9. Dispositif selon la revendication 8 **caractérisé en ce que** le repère (11) indique la position du maximum de l'harmonique H1 de la variation de charge radiale du pneumatique (4).

10. Dispositif selon la revendication 8 ou 9 **caractérisé en ce que** ladite zone coïncide avec ledit repère (11).

11. Dispositif selon l'une des revendications 8 à 10 **caractérisé en ce que** l'outil (8) se présente sous la forme d'une pince ou tenaille.

12. Dispositif selon la revendication 8 à 10 **caractérisé en ce que** l'outil (8) se présente sous la forme d'au moins un moyen de pression mécanique.

13. Procédé d'analyse d'un pneumatique consistant à définir sa sensibilité au montage **caractérisé en ce qu'**on détermine une variation de charge radiale relative due au montage du pneumatique sur une jante comportant des humps.

14. Procédé d'analyse selon la revendication 13 **caractérisé :**
- **en ce qu'**on détermine la variation de charge radiale de l'ensemble monté, la jante comportant des humps,
- **en ce qu'**on détermine la variation de charge radiale du pneumatique,
- **en ce qu'**on effectue la différence vectorielle entre les deux valeurs obtenues.

## Claims

1. Method of fitting a tyre (4) on a rim (7), the said tyre having a marking (11) indicating an extreme value of a parameter having a circumferential variation, **characterised in that** an area of at least one bead of the tyre is held at least during a first inflation phase and **in that** said area is azimuthed according to the said marking.

2. Method according to Claim 1, **characterised in that** the marking (11) indicates the position of the maximum of the harmonic H1 of the variation in radial load of the tyre (4).

3. Method according to Claim 1 or 2, **characterised in that** the said area coincides with the said marking (11).

4. Method according to Claim 1, 2 or 3, **characterised in that** areas of the two tyre (4) beads are held.

5. Method according to one of Claims 1 to 4, **characterised in that** the intensity of the holding decreases with the inflation.

6. Method according to one of Claims 1 to 5, **characterised in that** the tyre (4) is fitted on a wheel (3) where the maximum of the harmonic H1 of the average out-of-round is marked and **in that** the marking on the tyre is diametrically opposed to the marking on the wheel during fitting.

7. Method according to one of Claims 1 to 5, **characterised in that** the tyre (4) is fitted on a wheel (3) where the maximum of the harmonic H1 of the average out-of-round is marked and **in that** the marking on the tyre is positioned on a radius similar to that of the marking on the wheel during fitting.

8. Device for fitting a tyre (4) on a rim (7), the said tyre having a marking (11) indicating an extreme value of a parameter having a circumferential variation, **characterised in that** a tool (8) is provided for exerting a support force on an area of at least one sidewall (9) of the tyre at least during a first inflation phase and **in that** the said area is azimuthed according to the said marking (11).

9. Device according to Claim 8, **characterised in that** the marking (11) indicates the position of the maximum of the harmonic H1 of the variation in radial load of the tyre (4).

10. Device according to Claim 8 or 9, **characterised in that** the said area coincides with the said marking (11).

11. Device according to one of Claims 8 to 10, **characterised in that** the tool (8) is in the form of a clamp or nipper.

12. Device according to one of Claims 8 to 10, **characterised in that** the tool (8) is in the form of at least one mechanical pressure means.

13. Method of analysing a tyre consisting of defining its sensitivity to fitting, **characterised in that** a variation in relative radial load due to the fitting of the tyre on a rim having humps is determined.

14. Analysis method according to Claim 13, **characterised:**
- **in that** the variation in radial load of the fitted assembly is determined, the rim having humps,
- **in that** the variation in radial load of the tyre is determined,
- **in that** the vectorial difference between the two values obtained is effected.

## Patentansprüche

1. Verfahren zur Montage eines Luftreifens (4) auf eine Felge (7), wobei der Luftreifen eine Markierung (11) besitzt, die einen Extremwert eines eine Umfangsveränderung darstellenden Parameters anzeigt, **dadurch gekennzeichnet, dass** eine Zone mindestens eines Wulsts des Luftreifens während mindestens einer ersten Aufpumpphase zurückgehalten wird, und dass die Zone in Abhängigkeit von der Markierung beobachtet wird.

2. Verfahren nach Anspruch 1, **dadurch gekennzeichnet, dass** die Markierung (11) die Position des Maximums der Harmonischen H1 der radialen Laständerung des Luftreifens (4) anzeigt.

3. Verfahren nach Anspruch 1 oder 2, **dadurch gekennzeichnet, dass** die Zone mit der Markierung (11) zusammenfällt.

4. Verfahren nach Anspruch 1, 2, oder 3, **dadurch gekennzeichnet, dass** Zonen der zwei Wülste des Luftreifens (4) zurückgehalten werden.

5. Verfahren nach einem der Ansprüche 1 bis 4, **dadurch gekennzeichnet, dass** die Intensität des Rückhaltens mit dem Aufpumpen abnimmt.

6. Verfahren nach einem der Ansprüche 1 bis 5, **dadurch gekennzeichnet, dass** der Luftreifen (4) auf ein Rad (3) montiert wird, dessen Maximum der Harmonischen H1 der mittleren Unrundheit markiert wird, und dass die Markierung des Luftreifens bei der Montage der Markierung des Rads diametral gegenüberliegt.

7. Verfahren nach einem der Ansprüche 1 bis 5, **dadurch gekennzeichnet, dass** der Luftreifen (4) auf ein Rad (3) montiert wird, dessen Maximum der Harmonischen H1 der mittleren Unrundheit markiert wird, und dass die Markierung des Luftreifens auf einem Radius gleich demjenigen der Markierung des Rads bei der Montage positioniert wird.

8. Vorrichtung zur Montage eines Luftreifens (4) auf eine Felge (7), wobei der Luftreifen eine Markierung (11) besitzt, die einen Extremwert eines eine Umfangsveränderung darstellenden Parameters anzeigt, **dadurch gekennzeichnet, dass** ein Werkzeug (8) vorgesehen ist, um eine Auflagekraft auf eine Zone mindestens einer Flanke (9) des Luftreifens während mindestens einer ersten Aufpumpphase auszuüben, und dass die Zone in Abhängigkeit von der Markierung (11) beobachtet wird.

9. Vorrichtung nach Anspruch 8, **dadurch gekennzeichnet, dass** die Markierung (11) die Position des Maximums der Harmonischen H1 der radialen Laständerung des Luftreifens (4) anzeigt.

10. Vorrichtung nach Anspruch 8 oder 9, **dadurch gekennzeichnet, dass** die Zone mit der Markierung (11) zusammenfällt.

11. Vorrichtung nach einem der Ansprüche 8 bis 10, **dadurch gekennzeichnet, dass** das Werkzeug (8) in Form einer Zange oder Kneifzange vorliegt.

12. Vorrichtung nach Anspruch 8 bis 10, **dadurch gekennzeichnet, dass** das Werkzeug (8) in Form mindestens einer mechanischen Druckeinrichtung vorliegt.

13. Verfahren zur Analyse eines Luftreifens, das darin besteht, seine Montageempfindlichkeit zu definieren, **dadurch gekennzeichnet, dass** eine relative radiale Laständerung aufgrund der Montage des Luftreifens auf eine Humps aufweisende Felge bestimmt wird.

14. Analyseverfahren nach Anspruch 13, **gekennzeichnet dadurch:**
- **dass** die radiale Laständerung der montierten Einheit bestimmt wird, wobei die Felge Humps aufweist,
- **dass** die radiale Laständerung des Luftreifens bestimmt wird,
- **dass** die Vektordifferenz zwischen den zwei erhaltenen Werten durchgeführt wird.
